# EUROPEAN PATENT APPLICATION

(11) **EP 2 687 722 A1**
(43) Date of publication of application: **22.01.2014**
(21) Application number: 13176626.3
(22) Date of filing: 16.07.2013
(51) Int. Cl.: F04B 5/00, F04B 9/107, F04B 47/04, F03B 13/06, F03B 17/00

(54) **A dynamic fluid pump**

(30) Priority: 18.07.2012 GB 201212787
(71) Applicant: Al-Anezi, Neda, 73507 Qortuba (KW)
(72) Inventor: Al-Anezi, Neda, 73507 Qortuba (KW)
(74) Representative: Viering, Jentschura & Partner

(57) **Abstract**

A dynamic fluid pump for illustrating fluid dynamics includes a basin of the fluid have a base and a mass of fluid from the basin surface to the base. The dynamic fluid pump is supported at the bottom of the basin. The dynamic fluid pump includes four inner pipes. Two from the inner pipes are upwardly to the fluid tank, one upwardly to the surface of the basin and one act as a vent. The Smallest inner pipe are inside the main inner pipe and the secondary inner pipe smaller diameter than the main inner pipe. Two upwardly inner pipes (main and secondary) each one includes a piston in the bottom of the basin connected together to a pivot assembly in the base of the basin. So that, one of the pistons is at or near the top of one of the inner pipes when the other of the pistons is at or near the bottom of the other inner pipe, A dynamic fluid pump constructed and arranged to raise the fluid to the top.

## Description

This invention is a mechanism to lift the fluid to the top of the mechanism and uses a dynamic fluid pump immersed in a basin of fluid.

In essence a display mechanism in accordance with the present invention is used to raise the fluid to the top of the mechanism. The mechanism comprises a fluid basin having a mass of fluid with a fluid surface within a basin above the base. A dynamic fluid pump is located at the bottom of the fluid basin. In addition, a dynamic fluid pump includes four upwardly inner pipes, two inner pipes being upwardly connected to the fluid tank, one upwardly to the basin surface and one to act as a vent. The smallest inner pipe will be inside the main inner pipe and third inner pipe (secondary inner pipe) which has a smaller diameter than the main inner pipe.

Two of the upwardly inner pipes (main and secondary) comprise a piston in the bottom of the basin connected together to a pivot assembly in a lower portion of the basin. So that, when one of the pistons is at or near the top of one of the inner pipes, the other of the pistons is near the bottom of the other inner pipe.

A dynamic fluid pump fixed at the bottom of the fluid basin and has a main control valve on the main inner pipe on the top of piston reach. On the other hand, end bottom of smallest inner pipe has a damper are on the top of the main control valve. The main control valve has a circular aperture so that, if the valve is closed, the circular aperture will fit under the smallest inner pipe from the bottom and keep it open. The secondary inner pipe has a damper at the top of the basin and a control valve below. This damper is to keep filling pipe from the fluid and keep it from returning (keep the fluid on one direction without back).

The fluid in the secondary inner pipe from the piston to the fluid tank should be less than the fluid in the main inner pipe from the basin surface to the main control valve. Also, the fluid in the smallest inner pipe from the main control valve to the fluid tank should be less than the fluid in the secondary inner pipe from the piston to the damper.

When the basin is filled with fluid the secondary inner pipe will also fill with fluid. Therefore, the respective piston will go down to the bottom. Then, the valve of the secondary inner pipe is closed. Then, the main inner pipe is filled with fluid from the top, and the main valve is opened. The fluid then fills the main inner pipe. Then, the weight of the fluid in the main inner pipe is bigger than the weight of the fluid in the secondary inner pipe so that, the piston of the main inner pipe will goes down and the piston of the secondary inner pipe will goes up. This pushes the fluid in the fluid tank through the secondary inner pipe. Then, we close the main valve without closing the smallest inner pipe and open the valve of the secondary inner pipe. Thus, a weight of the fluid in the secondary inner pipe will be bigger than the weight of the fluid in the main inner pipe piston through the smallest inner pipe, Then, the piston goes down in the secondary inner pipe and the piston in the main inner pipe will goes up and pushing the fluid in the fluid tank through the smallest inner pipe.

Then the valve of the secondary inner pipe is closed and the main control valve of the main inner pipe is opened and the process is repeated again and again.

According to a first aspect of the present invention, there is provided a dynamic fluid pump mechanism, the mechanism comprising: a basin of liquid, the basin of liquid having a base and a mass of liquid within the basin and having a liquid surface; a liquid tank located above the basin; a dynamic fluid pump comprising: a main inner pipe extending upwardly from the base of the basin to the upper end of the basin; secondary and smallest inner pipes extending upwardly from the basin to the liquid tank, the secondary and smallest inner pipes having a smaller diameter than the main inner pipe, the smallest inner pipe having a diameter smaller than the secondary inner pipe and at least a portion of the smallest inner pipe being located within the main inner pipe; a vent inner pipe extending upwardly from the basin and open to atmosphere at an upper end thereof; a first piston located in the main inner pipe; a second piston located in the secondary inner pipe; and a pivot assembly located at the base of the basin and connecting the first and second pistons such that the first and second pistons reciprocate in opposite directions within the respective main or second pipe so that one of the pistons will go down within one of the inner pipes when the other of the pistons will go up within the other inner pipe.

In one embodiment, in use, the volume of liquid within the secondary inner pipe above the second piston is less than the volume of liquid within the main inner pipe above the first piston.

In one embodiment, in use, the volume of liquid within the smallest inner pipe is less than the volume of liquid within the secondary inner pipe above the second piston.

In one embodiment, a main control valve is located within the main inner pipe at the upper end of the reach of the first piston.

In one embodiment, the secondary inner pipe further comprises a secondary control valve.

In one embodiment, the smallest inner pipe is located on top of the main control valve.

In one embodiment, the main control valve comprises an aperture located adjacent the bottom end of the smallest inner pipe and arranged to keep the smallest inner pipe open when the main pipe is closed.

In one embodiment, a damper is located within the smallest inner pipe, the damper being arranged to enable liquid flow therethrough upwardly towards the liquid tank but to prevent downward liquid flow therethrough.

In one embodiment, a damper is located within the secondary inner pipe, the damper being arranged to enable liquid flow therethrough upwardly towards the liquid tank but to prevent downward liquid flow therethrough.

According to a second aspect of the present invention, there is provided a method of operating a dynamic fluid pump of the first aspect, the method comprising the steps of:
a) opening the main control valve and the secondary control valve; b) filling the basin with liquid such that the secondary inner pipe fills with liquid and that the second piston moves down towards the bottom of the secondary inner pipe; c) closing the secondary control valve; d) filling the basin with liquid such that the liquid level reaches the top of the main inner pipe and fills said main inner pipe such that such that the mass of the liquid in the main inner pipe is larger than the mass of the liquid in the secondary inner pipe, causing the first piston to move down and the second piston to move up and push the liquid in the secondary inner pipe into the liquid tank; e) opening the secondary control valve and closing the main control valve such that the mass of liquid above the first piston in the main inner pipe and in the smallest inner pipe is smaller than the mass of the liquid in the secondary inner pipe, causing the second piston to move downwardly and the first piston to move upwardly and force liquid to flow up to the liquid tank through the smallest inner pipe; and f) closing the secondary control valve and opening the main control valve; and g)
   repeating steps d) to f).

The invention will now be described in connection with the accompanying drawings wherein like reference numerals have been used to indicate like parts.

Embodiments of the present invention will now be described in detail with reference to the accompanying drawings, in which:

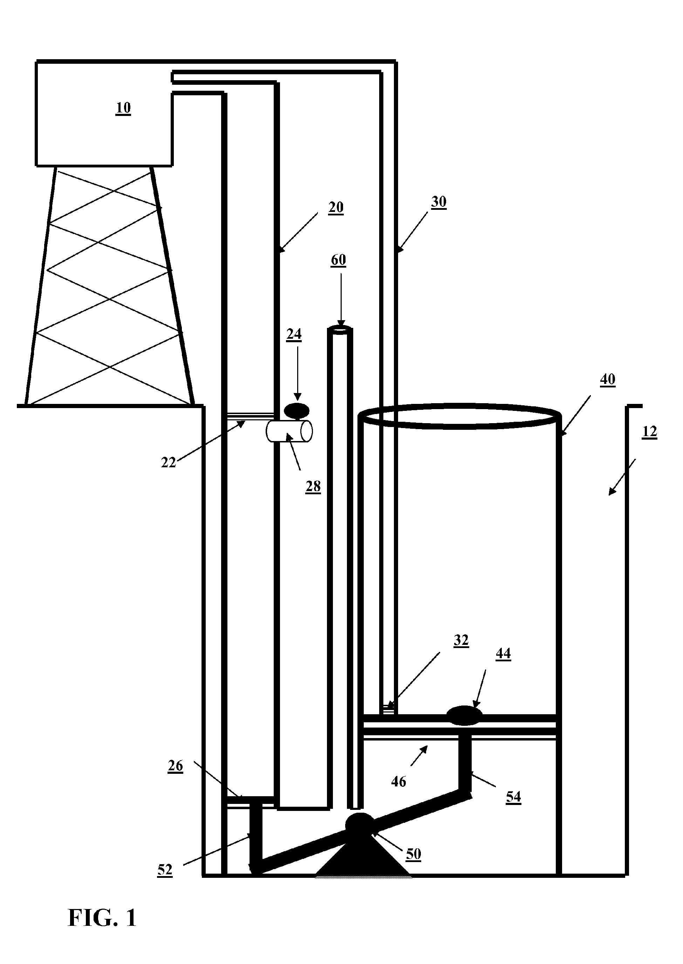

Figure 1 is a schematic illustration of a fluid basin with a dynamic fluid pump at the bottom including four upwardly inner pipes. Two inner pipes extend up to the fluid tank, one upwardly to the fluid basin surface and one inner pipe extends to above the fluid surface in order to act as a vent. The smallest inner pipe is inside the main inner pipe, the third inner pipe is named the secondary inner pipe. The secondary inner pipe is smaller in diameter than the main inner pipe and these two upwardly inner pipes (main and secondary) each one include piston in the bottom of the basin connected together to a pivot.
Figure 2 is shows the valve on the main inner pipe in which have a circular aperture so that if the main valve is closed, the inner main pipe will close without closing the inner smallest pipe. Also, the main inner pipe is in a closed position in this figure.
Figure 3 is shows the valve on the main inner pipe in open position.

The method is operable to push a mass of fluid up to the tank 10 at the top of the apparatus from fluid basin 12. In one embodiment, this fluid is water. Then, this water may be used to fall down into a turbine similar to a turbine in a dam to generate electrical power.

As illustrated in Figure 1, a dynamic fluid pump is installed in a basin 12 that is filled with fluid. The dynamic fluid pump is constructed at the bottom of the basin 10 and consists of main inner pipe 40, a secondary inner pipe 20, a smallest inner pipe 30, and a vent inner pipe 60. A dynamic fluid pump is at the bottom of the fluid basin 12. In addition, these four inner pipes are upwardly inner pipes. Two of inner pipes upwardly to the big tank 10, one inner pipe upwardly to the basin 12 surface and one inner pipe upwardly above the basin 12 as a vent.

The smallest inner pipe 30 is inside the main inner pipe 40 and the secondary inner pipe 20 smaller diameter than the main inner pipe 40. The upwardly-extending inner pipes (main 40 and secondary 20) each have a respective piston 26, 46 connected together to a pivot 50 assembly in a bottom of the basin 12. So that, if one of the pistons is at the top of one of the inner pipes the other pistons is at the bottom of the other inner pipe.

The dynamic fluid pump is fixed at the bottom of the fluid basin 12. The dynamic fluid pump has in the main inner pipe 40, at the top of the piston 46 reach, a main control valve 44. On the other hand, the smallest inner pipe 30 is on the top of the main control valve 44 with a damper 32.

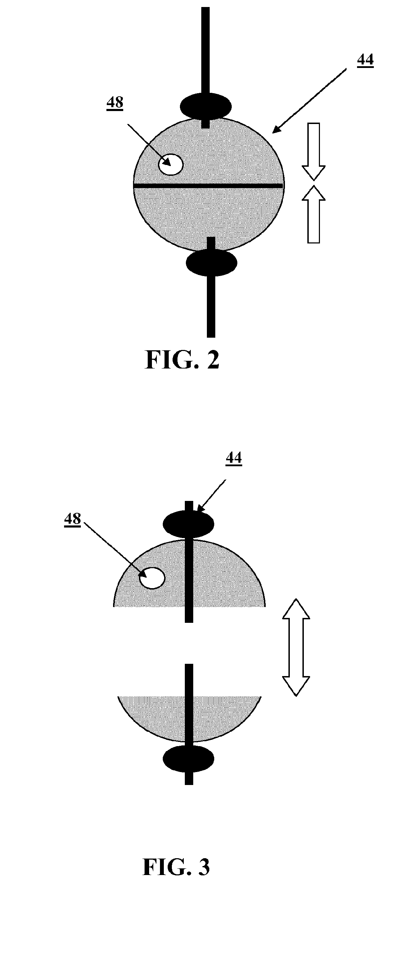

As illustrated in figure 2, the main control valve 44 has a circular aperture 48. So that, if the valve closed position the circular aperture 48 will fit under the smallest inner pipe 30 bottom to keep it open while the main inner pipe 40 closed.

The secondary inner pipe 20 has a damper (or non-return valve) 22 at the top of the basin 12 and secondary control valve 24 below, this damper 22 to fill the pipe with fluid.

The volume of the fluid in the secondary inner pipe 20 from the piston 26 to tank 10 should be less than the volume of the fluid of the main inner pipe 40 from the top of basin 46 to the main control valve 44. Also, the volume of the fluid in the smallest inner pipe 30 from the main control valve to 44 the tank 10 should be less than the fluid volume of the in the secondary inner pipe 20 from the piston 26 to the damper 22.

In the beginning the two valves are open (main control valve 44 and secondary control valve 24). Then, the basin 12 is filled with fluid. So that, the secondary inner pipe 20 will fill from fluid through the secondary fluid valve 24. Then, we close valve 24. Then, the fluid should fill in the basin 12 to reach the top of the main inner pipe 40 and fill it. Therefore, the mass of the fluid in the main inner pipe 40 will be bigger than the mass of the fluid in secondary inner pipe 20. So the piston 46 in the main inner pipe 40 will go down and the piston 26 in the secondary inner pipe 20 will move up. The fluid in the secondary inner pipe 20 will goes up through the damper 22 to the tank 10 and the damper 22 will pass the fluid in one way only and prevent the fluid from back. Then, we open the secondary control valve 24 and close the main control valve 44 at the same time. When the secondary valve 24 is complete open and the main control valve 44 is complete close. The mass of the fluid in the piston 46 of the main inner pipe 40 through the smallest inner pipe 30 will be smaller than the mass of the fluid in the secondary inner pipe 20. Therefore, the piston 26 in the secondary inner pipe 20 will go down and the piston 46 in the main inner pipe 40 will goes up. So that, the fluid will goes up through the damper 32 of the smallest inner pipe, the damper 32 pass the fluid from one way only and prevent the fluid from returning. Then we close the secondary control valve 24 and open the main control valve 44. Then, we repeat these steps again and again.

The vent inner pipe 60 is used to facilitate the movement of the pistons and prevents the air pressure from increasing within the apparatus.

Embodiments of the present invention have been described with particular reference to the examples illustrated. However, it will be appreciated that variations and modifications may be made to the examples described within the scope of the present invention.

## Claims

1. A dynamic fluid pump mechanism, the mechanism comprising:
a basin of liquid, the basin of liquid having a base and a mass of liquid within the basin and having a liquid surface;
a liquid tank located above the basin;
a dynamic fluid pump comprising:
a main inner pipe extending upwardly from the base of the basin to the upper end of the basin;
secondary and smallest inner pipes extending upwardly from the basin to the liquid tank, the secondary and smallest inner pipes having a smaller diameter than the main inner pipe, the smallest inner pipe having a diameter smaller than the secondary inner pipe and at least a portion of the smallest inner pipe being located within the main inner pipe;
a vent inner pipe extending upwardly from the basin and open to atmosphere at an upper end thereof;
a first piston located in the main inner pipe;
a second piston located in the secondary inner pipe; and
a pivot assembly located at the base of the basin and connecting the first and second pistons such that the first and second pistons reciprocate in opposite directions within the respective main or second pipe so that one of the pistons will go down within one of the inner pipes when the other of the pistons will go up within the other inner pipe.

2. A dynamic fluid pump mechanism according to claim 1, wherein, in use, the volume of liquid within the secondary inner pipe above the second piston is less than the volume of liquid within the main inner pipe above the first piston.

3. A dynamic fluid pump mechanism according to claim 1 or 2, wherein, in use, the volume of liquid within the smallest inner pipe is less than the volume of liquid within the secondary inner pipe above the second piston.

4. A dynamic fluid pump mechanism according to any one of the preceding claims, wherein a main control valve is located within the main inner pipe at the upper end of the reach of the first piston.

5. A dynamic fluid pump mechanism according to claim 4, wherein the secondary inner pipe further comprises a secondary control valve.

6. A dynamic fluid pump mechanism according to claim 4 or 5, wherein the smallest inner pipe is located on top of the main control valve.

7. A dynamic fluid pump mechanism according to claim 6, wherein the main control valve comprises an aperture located adjacent the bottom end of the smallest inner pipe and arranged to keep the smallest inner pipe open when the main pipe is closed.

8. A dynamic fluid pump mechanism according to any one of the preceding claims, wherein a damper is located within the smallest inner pipe, the damper being arranged to enable liquid flow therethrough upwardly towards the liquid tank but to prevent downward liquid flow therethrough.

9. A dynamic fluid pump mechanism according to any one of the preceding claims, wherein a damper is located within the secondary inner pipe, the damper being arranged to enable liquid flow therethrough upwardly towards the liquid tank but to prevent downward liquid flow therethrough.

10. A method of operating a dynamic fluid pump according to claim 5, the method comprising the steps of:
a) opening the main control valve and the secondary control valve;
b) filling the basin with liquid such that the secondary inner pipe fills with liquid and that the second piston moves down towards the bottom of the secondary inner pipe;
c) closing the secondary control valve;
d) filling the basin with liquid such that the liquid level reaches the top of the main inner pipe and fills said main inner pipe such that such that the mass of the liquid in the main inner pipe is larger than the mass of the liquid in the secondary inner pipe, causing the first piston to move down and the second piston to move up and push the liquid in the secondary inner pipe into the liquid tank;
e) opening the secondary control valve and closing the main control valve such that the mass of liquid above the first piston in the main inner pipe and in the smallest inner pipe is smaller than the mass of the liquid in the secondary inner pipe, causing the second piston to move downwardly and the first piston to move upwardly and force liquid to flow up to the liquid tank through the smallest inner pipe; and
f) closing the secondary control valve and opening the main control valve; and
g) repeating steps d) to f).
